# FASCICULE DE BREVET EUROPEEN

(11) **EP 1 749 728 B1**
(45) Date de publication et mention de la délivrance du brevet: **11.06.2008**
(21) Numéro de dépôt: 06380177.3
(22) Date de dépôt: 20.06.2006
(51) Int. Cl.: B62B 5/04, B65D 19/42, B60T 7/04

(54) **Frein pour chariots de chargement, palettes**
Bremse für Ladefahrzeug, Ladepalette
Brake for loading carriage or loading palet

(30) Priorité: 29.07.2005 ES 200501872
(43) Date de publication de la demande: 07.02.2007
(73) Titulaire: Eroski, S. Coop., 48230 Elorrio, (Vizcaya) (ES)
(72) Inventeur: Guenetxea Sasiain, Eneka, 20500 Mondragon (Gipuzkoa) (ES); Guisasola Azcargorta, José Ramon, 20500 Mondragon (Gipuzkoa) (ES)
(74) Mandataire: Urizar Barandiaran, Miguel Angel

(56) Documents cités:
- EP-A- 1 093 989
- FR-A1- 2 863 993
- GB-A- 574 386
- JP-A- 6 227 401
- NL-A- 7 902 877

## Description

Conventionnellement, les chariots ou les palettes de chargement, qui exigent des machines (transpalettes et similaires) pour les manipuler, n'ont prévu aucun dispositif de freinage, étant donné que c'est la machine de manutention elle-même qui en est équipée.

En les dotant de roues (comme, par exemple, dans le Brevet espagnol 200401573, du même demandeur), ces chariots ou ces palettes ont besoin d'être équipés de freins, afin d'offrir de la sécurité et de la stabilité, lorsqu'ils sont chargés et ne dépendent pas de machines de manutention.

Le document EP-1093989 décrit un frein pour chariots de chargement, palettes et similaires, selon le préambule de la revendication 1 composé d'une pédale, articulée dans une armature qui fait partie du chariot, ladite pédale, à son tour, s'articulant avec, au moins, un taquet guidé verticalement dans cette armature avec la possibilité de s'abaisser en freinant contre le sol, quand on appuie sur la pédale et de remonter, quand on n'appuie pas dessus.

L'objet de l'invention est un frein pour chariots de chargement, palettes et similaires selon le préambule de la revendication 1 et qui est caractérisé par:
a) le fait que la pédale est directement articulée dans l'armature et par
b) un mécanisme d'encliquetage, constitué par un levier lui aussi directement articulé dans cette armature, ledit levier définissant une denture unidirectionnelle en disposition conjuguée avec un onglet unidirectionnel défini dans la pédale, ledit onglet tendant à se maintenir logé dans cette denture, l'ensemble disposant de moyens pour le retour automatique de la pédale et du ou des taquets à leur position initiale, lorsque la denture du levier libère l'onglet et débloque cette pédale.

Est inclus également dans l'objet de l'invention le fait de disposer d'un ou plusieurs taquets dans chaque frein, ainsi que de disposer des moyens pour le blocage et/ou le retour automatique décrits ou d'autres similaires, fonctionnellement et techniquement équivalents, car cela n'altère, ne change ni ne modifie le caractère essentiel proposé.

Pour mieux comprendre l'objet de la présente invention, on représente sur les plans une forme préférentielle de réalisation pratique, susceptible de changements accessoires qui n'en dénaturent pas le fondement.

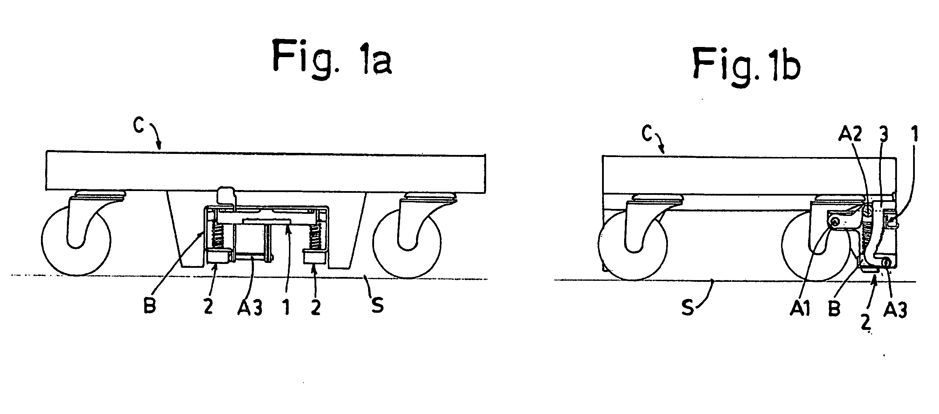

La figure 1 représente une vue générale en élévation -figure 1a- et de profil -figure 1b- d'un chariot de chargement (C) avec un frein incorporé selon l'invention, ce frein étant désactivé.

La figure 2 représente une vue générale en détail du frein selon l'invention en élévation -figure 2a- et de profil -figure 2b-, ce frein étant désactivé et en position similaire à celle de la figure 1.

La figure 3 représente une vue générale en détail du frein selon l'invention en élévation -figure 3a- et de profil -figure 3b-, ce frein étant activé et en position similaire à celle de la figure 1 .

On décrit ci-dessous un exemple de réalisation pratique, non limitative, de la présente invention.

L'objet de l'invention est un frein pour chariots de chargement, palettes et similaires qui, fondamentalement, comporte les composants et particularités suivants :
1.- Pédale.
   11.- Onglet unidirectionnel.
2.- Taquets.
   21.- Corps.
   22.- Tête.
3.- Levier.
   30.- Tête plate.
   31.- Denture unidirectionnelle.
4.- Ressorts.
   A1, A2, A3.- Articulations.
   B.- Bâti-armature.
   C.- Chariot.
   S.- Sol.

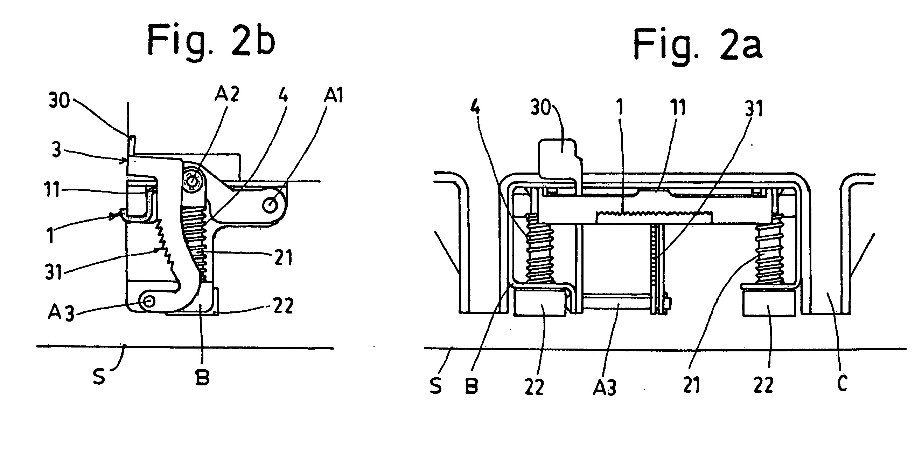

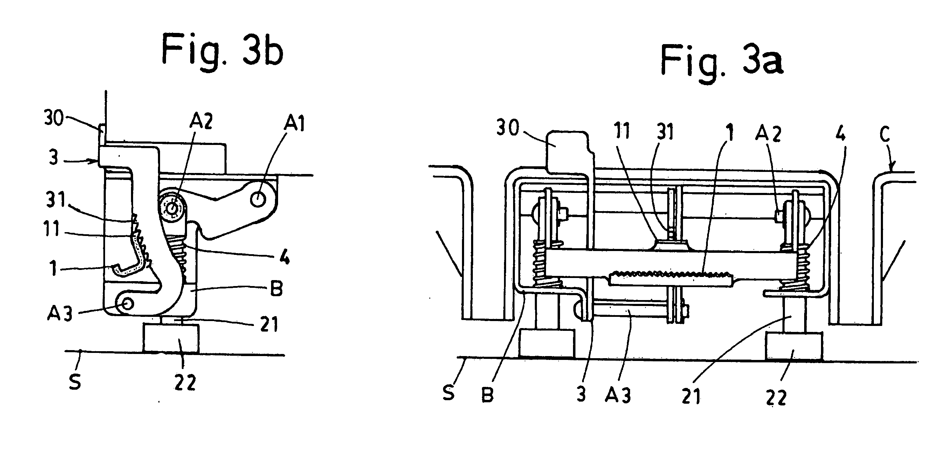

Conformément à l'invention et selon la réalisation représentée :
La pédale (1) est montée de façon articulée (A1) dans l'armature-bâti (B) qui fait partie du chariot (C), de telle sorte qu'elle puisse basculer autour de ce cette articulation (A1) en agissant sur elle (par exemple, en appuyant dessus).
La pédale (1) définit en elle-même un onglet unidirectionnel (11) et un ou plusieurs taquets (2) guidés linéairement dans l'armature-bâti (B) y sont montés de façon articulée (A2).
Le taquet (2) -ou chaque taquet (2) existant, quand il y en a plusieurs- a une configuration oblongue définissant un corps (21) et une tête (22) bien différenciés -voir figures 2 et 3-. La tête (22) est celle qui assure le freinage en venant buter contre le sol, et le corps (21) est le poussoir qui fait monter le ressort (4), qui constitue l'élément d'auto-retour, quand on cesse d'appuyer sur la pédale (1) et lorsque le levier (3) débloque le mécanisme d'encliquetage unidirectionnel.

Pour sa part, le levier (3) est monté de façon articulée (A3) dans l'armature-bâti (B), qui fait partie du chariot (C), de telle sorte qu'il puisse basculer autour de cette articulation, au moment de la retirer, par exemple, en poussant frontalement sa tête plate (30).

Le levier (3) dénfinit en lui-même une denture unidirectionnelle (31) en correspondance positionnelle avec l'onglet (11) de la pédale (1). La géométrie, la configuration et la disposition du levier (3) sont telles que l'onglet (11) de la pédale (1) et la denture (31) du levier (3) tendent à se maintenir encliquetés (voir figures 2b et 3b).

Avec cette structure, ces composants et cette disposition, au moment d'appuyer sur la pédale (1), celle-ci bascule autour de l'articulation (A1) en même temps que les taquets (2), s'y articulant en (A2), qui s'abaissent linéairement, guidés dans le bâti (B) jusqu'à freiner le chariot (C) en venant buter contre le sol (S).

L'onglet (11) de la pédale (1) s'encastre dans l'une des dents de la denture unidirectionnelle (31) du levier (3) et le frein est maintenu activé, même quand on cesse d'appuyer sur la pédale (1).

Pour desserrer le frein, il suffit d'exercer une pression sur la tête plate (30) du levier (3), pour qu'en tournant autour de l'articulation (A3), la denture (31) de celle-ci dégage l'onglet (11) de la pédale (1) et que l'assemblage pédale (1) et taquets (2) remonte poussé par les ressorts (4).

## Revendications

1. Frein pour chariots de chargement, palettes et similaires, composé d' une pédale (1), articulée (A1) dans une armature (B) qui fait partie du chariot (C), ladite pédale (1), à son tour, s'articulant (A2) avec, au moins, un taquet (2) guidé verticalement dans cette armature (B) avec la possibilité de s'abaisser en freinant contre le sol (S), quand on appuie sur la pédale (1) et de remonter, quand on n'appuie pas dessus et **caractérisé par:**
a) **le fait que** la pédale (1) est directement articulée (A1) dans l'armature (B) et par
b) un mécanisme d'encliquetage, constitué par un levier (3) lui aussi directement articulé (A3) dans cette armature (B), ledit levier (3) définissant une denture unidirectionnelle (31) en disposition conjuguée avec un onglet unidirectionnel (11) défini dans la pédale (1), ledit onglet (11) tendant à se maintenir logé dans cette denture (31), l'ensemble disposant de moyens pour le retour automatique de la pédale (1) et du ou des taquets (2) à leur position initiale, lorsque la denture (31) du levier (3) libère l'onglet (11) et débloque cette pédale (1).

2. Frein pour chariots de chargement, palettes et similaires, selon la revendication antérieure, **se caractérisant par le fait que**, de préférence, on dispose deux taquets (2) en disposition symétrique par rapport à la pédale (1).

3. Frein pour chariots de chargement, palettes et similaires, selon les revendications antérieures, **se caractérisant par le fait que** lesdits moyens pour le retour automatique de la pédale (1) et des taquets (2) à leur position initiale sont consitués par des ressorts (4) qui, montés coaxialement sur les taquets (2), sont comprimés quand on appuie sur la pédale (1) et se détendent quand on le débloque.

## Claims

1. Brake for carrier trucks, pallets and similar, which consists of a pedal (1), articulated (A1) in a framework (B) which forms a part of the carriage (C); this pedal (1), in turn, articulates (A2) to , at least, one block (2) guided vertically in said framework (B) with the possibility of descending, braking against the ground (S) on pressing the pedal (1) and ascending on releasing it, **characterized by**:
a) the fact that the pedal (1) is directly articulated (A1) in the framework (B) and by
b) a ratchet mechanism, consisting of a lever (3), also articulated (A3) in said framework (B); this lever (3) defines unidirectional teeth(31) aligned in position with a unidirectional tab (11) defined in the pedal (1); this tab (11) tends to remain lodged in said teeth (31); the unit having means for automatic return of the pedal (1) and block(s) (2) to their initial position when the teeth (31) of the lever (3) releases the tab (11) and unblocks said pedal (1).

2. Brake for carrier trucks, pallets and similar, according to the aforementioned claim, **characterized** preferably by having two blocks(2) in symmetrical position with respect to the pedal (1).

3. Brake for carrier trucks, pallets y similar, according to the aforementioned claims, **characterized by** said means for automatic return of the pedal (1) and blocks(2) to their initial position consisting of springs (4) which, mounted coaxially on the blocks (2), are compressed upon stepping on the pedal (1) and expand upon unblocking it.

## Patentansprüche

1. Bremse für Lade-, Paletten- und ähnliche Wagen, die aus einem Pedal (1) besteht, das in einem zum Wagen (C) gehörenden Gestell-Rahmen (B) über ein Gelenk verbunden ist (A1) ist, wobei das Pedal (1) wiederum mindestens mit einem in diesem Gestell (B) senkrecht geführten Anschlag (2) über ein Gelenk verbunden ist (A2), der bei Druck auf das Pedal (1) beim Bremsen gegen den Boden (S) hinabfahren und bei Freigabe hinauffahren kann und sich **dadurch kennzeichnet, dass**
a) das Pedal (1) unmittelbar im Gestell (B) über ein Gelenk (A1) verbunden ist und
b) ein aus einem auch mit diesem Gestell (B) über ein Gelenk (A3) verbundenen Hebel (3) gebildeten Ratschenmechanismus besteht, wobei der Hebel (3) eine einseitige Verzahnung (31) in einem Zusammenspiel mit einer auf dem Pedal (1) definierten einseitigen Klinke (11) definiert, wobei die Klinke (11) dazu neigt, auf dieser Verzahnung (31) aufzuliegen, und die Baugruppe über Mittel zur automatischen Rückkehr des Pedals (1) und des Anschlags / der Anschläge (2) auf ihre Ausgangsstellung verfügt, wenn die Verzahnung (31) des Hebels (3) die Klinke (111) freigibt und dieses Pedal (1) entriegelt.

2. Bremse für Lade-, Paletten und ähnliche Wagen, laut obigem Patentanspruch, die sich **dadurch kennzeichnet, dass** vorzugsweise zwei Anschläge (2) symmetrisch zum Pedal (1) angeordnet sind.

3. Bremse für Lade-, Paletten und ähnliche Wagen, laut obigen Patentansprüchen, die sich **dadurch kennzeichnet, dass** die besagten Mittel zur automatischen Rückkehr des Pedals (1) und der Anschläge auf deren Ausgangsstellung aus Federn (4) bestehen, die koaxial auf die Anschläge (2) montiert sind und sich beim Treten auf das Pedal (1) zusammen drücken und beim Entsperren ausdehnen.
